Europäisches Patentamt

European Patent Office

Office européen des brevets

(11) Publication number: **0 404 401**
**A1**

## EUROPEAN PATENT APPLICATION

(21) Application number: 90306226.3

(22) Date of filing: 07.06.90

(51) Int. Cl.⁵: **F16K 1/34**

(30) Priority: **19.06.89 US 368003**

(43) Date of publication of application:
**27.12.90 Bulletin 90/52**

(84) Designated Contracting States:
**DE FR GB IT**

(71) Applicant: **PRICE PFISTER, INC.**
**13500 Paxton Street**
**Pacoima California 91331-0637(US)**

(72) Inventor: **Tarney, Matthew G.**
**1560 Ontario Avenue**
**Pasadena, California 91103(US)**
Inventor: **Gonzalez, Teodoro J.**
**28915 Poppy Meadow Street**
**Canyon Country, California 91351(US)**

(74) Representative: **Stagg, Diana Christine et al**
**Emhart Patents Department Lyn House 39**
**The Parade**
**Oadby Leicester LE2 5BB(GB)**

(54) **Fluid valve.**

(57) A fluid valve includes a valve body having a fluid inlet and a fluid outlet. A valve seat is formed from the valve body between the fluid inlet and fluid outlet for the passage of fluid therebetween. A movable valve member formed from non-resilient, preferably ceramic, material is positioned in the valve body between the valve seat and the fluid outlet for controlling the flow of fluid through the valve seat. The valve member is axially movable relative to the valve seat, with the quantity of fluid flowing through the seat to the fluid outlet being directly proportional to the distance between the valve member and the valve seat.

FIG.1

## FLUID VALVE

The present invention relates to a fluid valve for use in a faucet and in particular to such a valve which utilizes two non-resilient members to regulate the flow of fluid through the faucet.

Present fluid valves used in faucets typically incorporate resilient seals to control and/or shut off the flow of fluid therethrough. Although resilient seals are effective in shutting off the flow of fluid, they have a number of disadvantages. For example, resilient seals wear with use and their resilient properties deteriorate in time due to exposure to the variable temperature fluid medium and the degrading effect thereof. This deterioration results in premature failure of the seal resulting in leaks and a loss in performance.

Another unwanted characteristic of resilient seals is the effect of thermal expansion on valve performance. In valve configurations where the flow rate of the fluid medium is controlled by the flow area regulated by the resilient seal, expansion and contraction of this seal due to fluid thermal variation will affect the flow area, either reducing or increasing the flow depending on the direction of change of the temperature of the fluid medium. This phenomenon when changing from a low to a high temperature is commonly referred to in the plumbing trade as "hot water shut-off" where the flow of water is severly restricted.

Another type of prior art valve is commonly referred to as a shear plate type wherein two plates are used to control the flow of fluid medium and the two relatively movable plates are always in contact with each other. Such continuous contact between the plates creates frictional drag. Also, full contact type shear disc valves have a "dead band" zone resulting from the overlap condition of the openings between the stationary and movable discs.

The valve in accordance with the present invention eliminates the "hot water shut-off" condition common with resilient seal valves because the hard ceramic material forming the non-resilient discs has a low coefficient of expansion. Accordingly, the flow area created by the two discs stays constant over extreme variations in fluid temperatures.

Since the flow area for the fluid is directly proportional to the location of the movable disc relative to the stationery disc, the moment the valve is actuated to move the movable disc, fluid begins to flow through the valve. Prior art valves normally have an inherent "dead band" zone between the extreme mechanical shut-off position and the relative position of the discs of the valve when fluid begins to flow. The advantage of having a zero "dead band" zone is easier user operation since flow is predictable and instantaneous when the movable disc separates from the stationary disc.

It is accordingly an object of the present invention to produce a fluid valve in which the disadvantages of the known resilient seal and shear plate type valves are reduced or substantially obviated.

The invention comprises a fluid valve comprising a valve body having a fluid inlet and a fluid outlet; a first valve member made from non-resilient material defining a valve seat and arranged within the valve body between the fluid inlet and the fluid outlet for the passage of fluid therebetween and a second, movable valve member, made from non-resilient material and positioned in the valve body for controlling the flow of fluid through the valve seat to the fluid outlet, characterised in that the first valve member is fixed in position and the second valve member is axially movable relative to the valve seat, with the quantity of fluid flowing through the seat to the fluid outlet being directly proportional to the distance between the valve member and the valve seat, and means are provided connected to the movable valve member for axially moving the valve member relative to the valve seat.

The invention will now be further described with reference to the accompanying drawings, in which

Figure 1 is a longitudinal sectional view of an embodiment of a fluid valve in accordance with the present invention, with the parts thereof positioned so that fluid flows from the fluid inlet to the fluid outlet thereof; and

Figure 2 is a view similar to that illustrated in Figure 1 showing the parts of the fluid valve in a closed position.

In referring to the various figures of the drawing, like numerals shall refer to like parts.

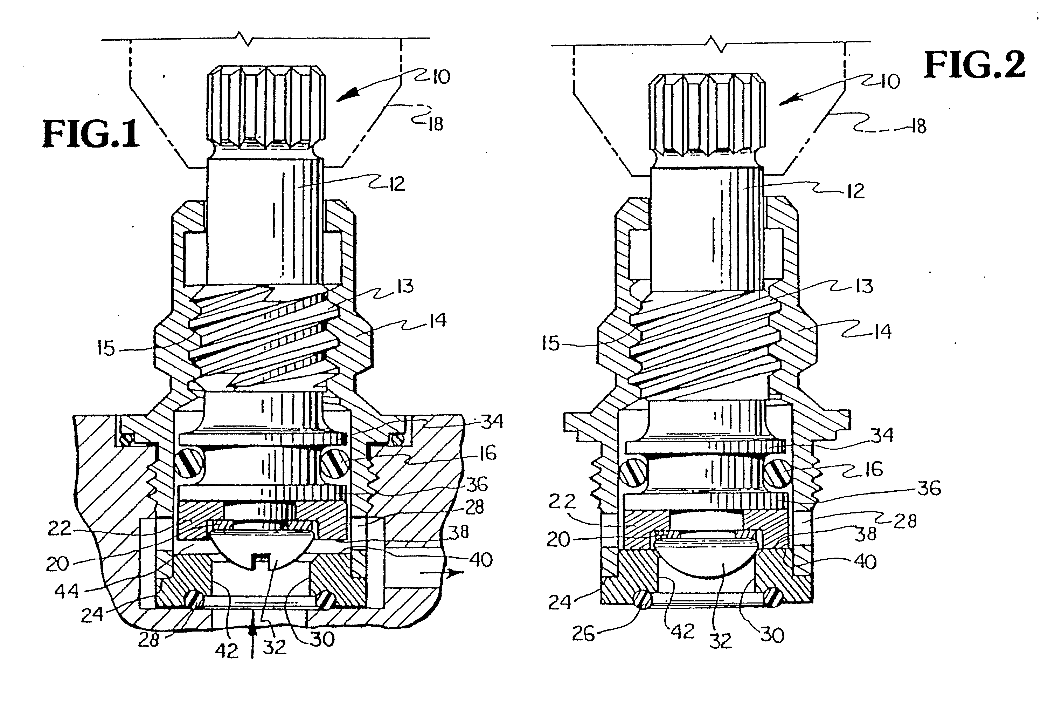

In Figures 1 and 2, there is illustrated a fluid valve 10 which includes a valve body 11, and a bonnet 14 having a threaded stem 12 mounted therein. Threads 13 on stem 12 made with complimentary internal threads 15 on bonnet 14 to provide for axial movement of the stem relative to the bonnet. Stem 12 includes a faucet handle 18 at its upper end to enable a user to move the stem axially to control the flow of fluid through valve 10.

Stem 12 includes opposed flange like surfaces 34, 36 which mount therebetween a seal ring 16, illustrated as a conventional O-ring. The seal ring is made from elastomeric material such as rubber or neoprene. A first or top plate 22 is mounted to the underside of stem 12 by suitable means such as retaining screw 32.

Fluid valve 10 includes a first fluid flow opening 28 and a second fluid flow opening 30 disposed at right angles to the first open. In the preferred embodiment opening 28 serves as a fluid flow outlet and opening 30 serves as a fluid flow inlet for the flow of fluid through valve 10.

Valve 10 includes a second or bottom plate 24 mounted at the bottom of bonnet 14. Plate 24 defines the valve seat for valve 10 and includes an axially extending bore 42 which communicates with inlet 30. Plate 24 is fixed in position and plate 22 is movable with stem 12. Both of the plates are made from ceramic material, such as aluminium oxide, for a reason to be more fully discussed hereinafter. Faucet 10 includes a second seal ring 26, illustrated as an O-ring. Like seal ring 16, seal ring 26 is also made from elastomeric material such as rubber or neoprene.

Figure 2 illustrates valve 10 in its closed position, in which the flow of fluid from inlet 30 to outlet 28 is prevented. In the closed position, it will be noted that opposed faces 38 and 40 respectively of top plate 22 and bottom plate 24 are in intimate contact to prevent fluid flow therebetween. Surfaces 38 and 40 are highly polished to provide surfaces that are uniformly smooth and flat so that leakage between the surfaces is prevented when the valve is in its closed position.

Figure 1 illustrates the valve in an open position, in which fluid can flow from inlet 30 to outlet 28 through bore 42. It will be noted that when the valve is in its open position, valve stem 12 is axially moved upwardly with respect to bonnet 14 which creates an axial space 44 between the opposed surfaces 38 and 40 of the top and bottom plates. The quantity of fluid flowing through inlet 30 to outlet 28 is proportional to the axial distance between top plate 22 and bottom plate 24.

The fluid valve of the present invention eliminates the use of resilient seals to control and/or shut off the flow of fluid through the valve. The valve relies upon the intimate contact between opposed faces 38 and 40 of plates 22 and 24 to shut off the flow of fluid. Elimination of resilient seals concomitantly eliminates their inherent problems, such as wear and deterioration of the seals due to the seals exposure of a variable temperature fluid medium; and "hot water shut-off" due to expansion and contraction of the resilient seal in response to thermal variations in the fluid.

As discussed previously, plates 22 and 24 are formed from ceramic materials, such a aluminium oxide. A ceramic material has a low coefficient of expansion and thus the flow area created by relative movement between the two plates stays constant irrespective of variations in fluid temperature.

Further, because the flow area is proportional to the location of the movable plate relative to the stationary plate when the valve is actuated to create a flow area therebetween, fluid flows substantially instantaneously from the inlet to the outlet. Thus, the "dead band" zone between the extreme mechanical shut off position and the position when fluid begins to flow that exists in conventional valves has been eliminated. The elimination of this "dead band" zone results in easier user operation since flow through the valve is predictable and substantially instantaneous when the top plate is separated from the bottom plate.

As a further advantage, since the plates are separated to create a fluid flow area when the valve is open, there is essentially no friction between the opposed surfaces of the plate to create wear.

Since the bottom plate 24 also functions as a mechanical stop to prevent excessive axial movement of stem 12, the mechanical stop position and the flow shut off position are thus coincident. This concept of a fluid valve design results in lower cost since manufacturing tolerances do not affect the relationship of the mechanical stop and flow shut off position.

A further advantage of the present valve over the prior art valves such as the shear type plate valve and resilient seal valve results from the creation of a fluid flow area through the axial separation between plates 22 and 24. This allows contaminants to flush through the valve without damaging sealing surfaces. The resilient materials forming the prior art resilient valves are subject to damage when particles are trapped between the sealing surfaces. In shear type valves, particles may lodge between the opposed surfaces of the two plates which may damage the plates when the plates are rotated relative to each other. The valve of the present invention allows particles to be carried past the sealing point since the sealing surfaces of the top and bottom plates are fully separated when fluid is flowing from inlet to outlet.

## Claims

1. A fluid valve (10) comprising
a valve body (11) having a fluid inlet (32) and a fluid outlet (28);
a first valve member (24) made from non-resilient material defining a valve seat and arranged within the valve body (10) between the fluid inlet (32) and the fluid outlet (28) for the passage of fluid therebetween and
a second, movable valve member (22), made from non-resilient material and positioned in the valve body (10) for controlling the flow of fluid through the valve seat to the fluid outlet (28),
characterised in that the first valve member (24) is fixed in position and the second valve member (22) is axially movable relative to the valve seat, with the quantity of fluid flowing through the seat to the fluid outlet being directly proportional to the distance between the valve member and the valve seat,

and means are provided connected to the movable valve member (22) for axially moving the valve member relative to the valve seat.

2. A fluid valve according to claim 1, characterised in that the non-resilient material is a ceramic material.

3. A fluid valve according to claim 2, characterised in that the ceramic material is aluminium oxide.

4. A fluid valve according to any of claims 1 to 3, characterised in that the fluid inlet (32) and fluid outlet (28) are disposed at substantially 90 degrees with respect to each other.

5. A fluid valve according to claim 4, characterised in that the valve seat is substantially ring-like in shape, with the valve member having an annular surface for engagement with the ring-like surface of said valve seat for discontinuing flow of fluid between said fluid inlet and fluid outlet.

**FIG.2**

**FIG.1**

| | European Patent Office | EUROPEAN SEARCH REPORT | Application Number |

# EUROPEAN SEARCH REPORT

| DOCUMENTS CONSIDERED TO BE RELEVANT | | | EP 90306226.3 |
|---|---|---|---|

| Category | Citation of document with indication, where appropriate, of relevant passages | Relevant to claim | CLASSIFICATION OF THE APPLICATION (Int. Cl.5) |
|---|---|---|---|
| Y | <u>EP - A1 - 0 045 332</u> (SEIM) * Page 1, lines 1-13; fig. 1,3,4 * -- | 1-3 | F 16 K 1/34 |
| Y | <u>NL - A - 7 902 134</u> (ASTAVA B.V.) * Page 1, line 25 - page 2, line 16; claims 1-3 * ---- | 1-3 | |
| | | | TECHNICAL FIELDS SEARCHED (Int. Cl.5) F 16 K 1/00 |

The present search report has been drawn up for all claims

| Place of search | Date of completion of the search | Examiner |
|---|---|---|
| VIENNA | 15-10-1990 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)